# EUROPEAN PATENT SPECIFICATION

(11) **EP 0 311 182 B1**
(45) Date of publication and mention of the grant of the patent: **19.05.1993**
(21) Application number: 88202124.9
(22) Date of filing: 29.09.1988
(51) Int. Cl.: G03B 21/62

(54) **Method of manufacturing a master for the fabrication of projection screens and tool for carrying out the method**
Verfahren zum Herstellen einer Muttermatrize zum Herstellen von Projektionsschirmen sowie Werkzeug zum Durchführen des Verfahrens
Procédé de réalisation d'une matrice mère destinée à la fabrication d'écrans de projection et outil de mise en oeuvre du procédé

(30) Priority: 07.10.1987 NL 8702384
(43) Date of publication of application: 12.04.1989
(73) Proprietor: Philips Electronics N.V., 5621 BA Eindhoven (NL)
(72) Inventor: Dona, Marinus Josephus Jakobus, NL-5656 AA Eindhoven (NL); Swinkels, Johannes Martinus Maria, NL-5656 AA Eindhoven (NL)
(74) Representative: Melio, Jan Dirk

(56) References cited:
- FR-A- 934 106
- US-A- 3 994 562

## Description

The invention relates to a method of manufacturing a master for the fabrication of projection screens provided on one side with a lens structure consisting of a plurality of parallel rectilinear lens elements which are separated by grooves, according to which method a plurality of parallel rectilinear grooves and ribs corresponding to the lens structure are chiselled with profile chisel means on one side of a plate of machinable material. The invention further relates to a chisel for carrying out the method.

For the manufacture of projection screens, more particularly of rear projection screens, in general first a so-called master or mother mould is manufactured; by means of known electrode position techniques, via one or more intermediate moulds a number of production moulds are manufactured from this master. By means of the production moulds thus obtained, the projection screens can be manufactured with the aid of various forming processes, such as pressing, injecting-moulding, etc. For this purpose, however, in general the known replica techniques are used.

A known method of manufacturing a master for projection screens is disclosed in US-A-3994562. According to said method grooves are cut in a drum of wax by means of a chisel. The drum is cut with a series of grooves and a molding material is placed around the drum and bled. After removing the molding material from the drum, it is turned inside out and a copy is made. This copy is again copied and its result is electroformed and serves as a master roller for projection screens. Because the grooves are formed by one cut of the chisel, the surfaces of the grooves are not very smooth and the size of the grooves is not very accurate. The chisel is subjected to a considerable mechanical load as well as the drum material between two successive grooves.

It is an object of the invention to provide a method for the manufacture of masters wherein the aforementioned drawbacks are avoided.

According to the invention, the method is for this purpose characterized in that the profile chisel means comprises a plurality of subchisels with different profiles, that the profile of each of the grooves in the plate is chiselled in a number of chiselling steps equal to the number of the subchisels, each of the steps being done by a different one of the subchisels, and in that during each of the steps several of the grooves are simultaneously chiselled, each by a different one of the subchisels.

The subchisels can be made of one piece or they can detachably connected to a common holder or to each other.

By forming the grooves in several steps, the mechanical load of the chisel and the substrate by the chisel is spread over several steps, as a result of which the reproducibility of the method is improved and the accuracy of the size of the grooves is increased. When determining the chiselling rate in the various manufacturing steps, parts that can be profiled only with difficulty can be taken into account in such a manner that on such parts requiring a high degree of accuracy to their surface the chiselling rate in the last step is a minimum.

For the manufacture of a master with a negative profile, a pattern of grooves and ribs which is negative with respect to the lens structure is provided on the plate, the superimposed profile of the profile chisel used being identical to the profile of the lens elements. For the manufacture of a master with a positive profile, a pattern of grooves and ribs identical to the lens structure is provided on the plate by means of a chisel having a profile negative with respect to the lens elements.

A further improvement to the reproducibility and an increase in the accuracy of the machined profile of the work-piece are obtained in a preferred embodiment of the method according to the invention in that the several chiselling steps comprise a precutting step, a cutting step and a finishing step.

Experiments have shown that by such a subdivision of the whole operation, patterns of grooves and ribs that can be manufactured only with great difficulty may be provided on a plate in a reproducible and accurate manner within a comparatively short time.

In a preferred embodiment of the method according to the invention, the cutting step and the finishing step are carried out simultaneously on two adjacent grooves. Thus, it is achieved that the rib located between the two adjacent grooves is chiselled simultaneously on both flanks and is therefore loaded substantially uniformly so that undesired deformation of the rib due to unilateral load is avoided with certainty. This measure is especially of importance when cutting sharp and deep structures for producing forces substantially balancing each other.

A still further embodiment of the method according to the invention is characterized in that the plate is wrapped around a rotatable drum, in that the chisel means are mounted in a chisel holder, in that a first chiselling operation is carried out by a feed-in movement of the chisel holder with the chisel means in the radial direction with respect to the centre line of the drum and by a rotary movement of the drum and in that due to successive stepwise relative displacements of the drum and the chisel holder in the axial direction over a distance equal to the pitch distance of the grooves to be cut further successive chiselling operations are carried out. When the plate is wrapped around a drum, a rigid cylindrical body is obtained, which can be machined with a high degree of accuracy. Dye to the use of a multiple profile chisel several grooves are machined simultaneously.

It has to be noted that US-A-3,765,281 describes a method of manufacturing of a master, wherein each rib of a rib pattern is formed in a large number of small steps by means of a single one-point diamond chisel.

Before performing the several chiselling steps the plate may be first machined substantially flat. This step can take place on the same drum as the chiselling of the grooves and by means of a one-point chisel. When the plate is previously machined flat, this has a positive influence on the accuracy to size of the machined plate.

The plate of the master may consist of any machinable material suitable for the manufacture of production moulds via the known electrode position techniques. The plate material used will often be of synthetic material, preferably methyl acrylate, with which satisfactory results have been obtained in experiments.

When using a plate consisting of a material which is wear resistant and of sufficient mechanical strength, for instance polyacetal, the master itself may be used as production mould.

The invention further relates to a chisel for carrying out the method. According to the invention, the chisel is a multiple head chisel and is composed of three subchisels with different profiles, i.e. a precutting chisel, a cutting chisel and a finishing chisel, the subchisels being arranged for simultaneously chiselling profiles of different grooves. Experiments have shown that difficult profiles having a high accuracy of size and shape can be obtained with a multiple head chisel composed of three subchisels.

A preferred embodiment of the chisel according to the invention is characterized in that the distance between the median planes of the cutting chisel and the precutting chisel is a multiple of the distance between the median planes of the cutting chisel and the finishing chisel. The distance between the median planes of the cutting chisel and the finishing chisel is equal to the pitch distance between the grooves to be cut so that during the operation the two flanks of a rib being formed are tooled simultaneously; the rib is supported at the two flanks by the cutting chisel and the fisnishing chisel and is loaded substantially uniformly so that undesired deformations of the rib in the transverse direction are avoided. Due to the fact that further the distance between the median planes of the cutting chisel and the precutting chisel is comparatively large, i.e. equal to a multiple of the pitch distance between the grooves to be cut, the rigidity of the multiple head chisel is influenced positively.

Preferably, the subchisels are made of carbide metal . Experiments have shown that chisels of carbide metal have a long lifetime, especially when used for machining methyl acrylate. A master having the dimensions of 1382 x 1100 mm could be manufactured with one and the same chisel.

The invention will be described more fully with reference to the drawing. In the drawing:
Fig. 1 shows diagrammatically an arrangement for carrying out the method according to the invention;
Figures 2a to 2h show the manufacture of a master by the method according to the invention in a number of successive steps;
Fig. 3 is a longitudinal sectional view of the chisel according to the invention;
Fig. 4 shows a sectional view and on an enlarged scale a part of the master manufactured by the method according to the invention.

For the manufacture of a master for projection screens, and more particularly rear projection screens, the starting material is a plate of machinable material, for example of synthetic material and preferably of methyl acrylate and of the desired dimensions. This plate is wrapped around a rotatable drum and is then provided at its free surface with a pattern of rectilinear parallel grooves and ribs by a slotting operation with the aid of a multiple profile chisel. Preferably, the surface to be machined of the plate wrapped around the drum is cut substantially flat, for example by means of a one-point chisel of diamond.

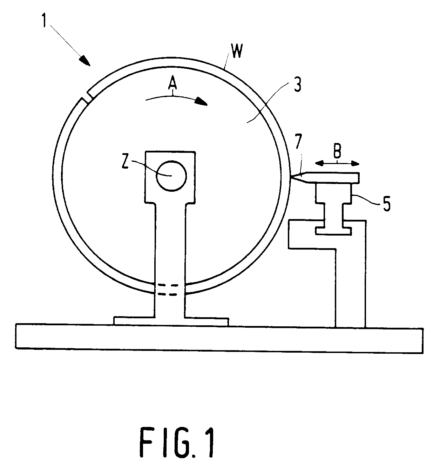

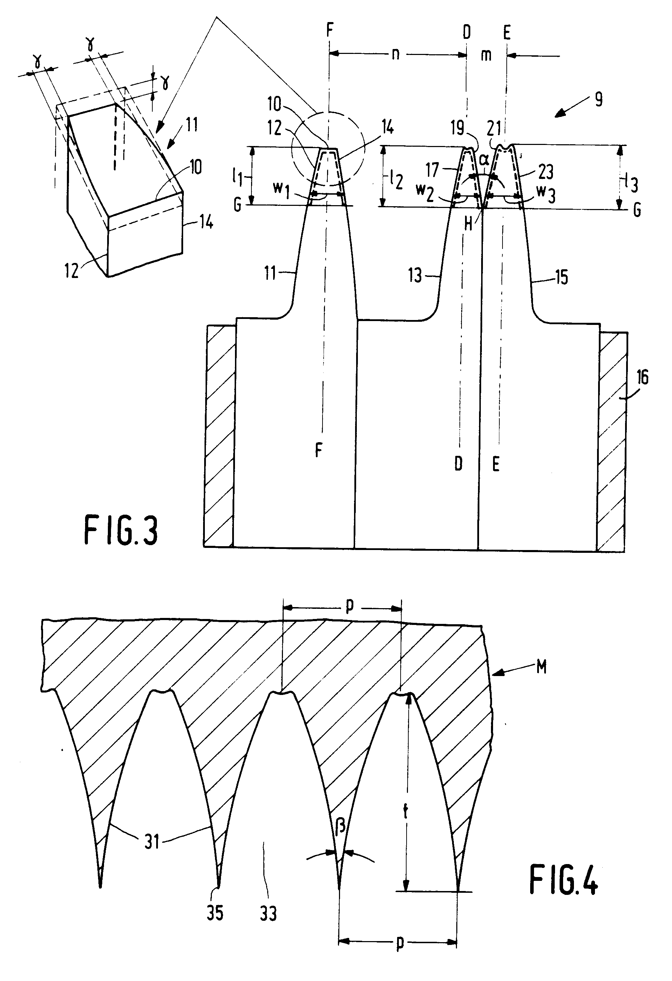

This situation is shown in Fig. 1, which shows diagrammatically an arrangement 1 comprising a drum 3 rotatable in the direction of the arrow A and a chisel holder 5 with a one-point chisel 7. W designates a work-piece, i.e. the plate wrapped around the drum. The chisel holder 5 and the drum 3 are displaceable with respect to each other in a direction parallel to the centre line Z of the drum. Further, the chisel holder 5 is displaceable according to the arrow B in a direction radial with respect to the centre line Z of the drum. After the plate W has been cut flat the one-point chisel 7 is replaced by the multiple profile chisel 9 shown in greater detail in Fig. 3.

This profile chisel 9 is a multiple head chisel and is composed of three subchisels, i.e. a precutting chisel 11, a cutting chisel 13 and a finishing chisel 15. The three subchisels are held together in a fitting 16. The distance m between the median planes D-D and E-E of the cutting chisel 13 and the finishing chisel 15 is equal to the pitch distance p of the grooves to be cut. The distance n between the median planes D-D and F-F of the cutting chisel 13 and the precutting chisel 11 is a multiple of the pitch distance ṕ, in the embodiment shown equal to four times the pitch distance. As clearly appears from Fig. 3, the distances m and n relate to the active cutting portion of the subchisels. The active cutting portion of the subchisels extends from the tip to the transverse plane G-G through the line of intersection H of the cutting edges 19 and 21 of the subchisels 13 and 15. The length l₃ of the active portion of the finishing chisel 15 is greater than the length l₂ of the cutting chisel 13, of which the length in turn is larger than the length l₁ of the precutting chisel 11. The width w₁ of the precutting chisel 11 is larger throughout its length l₁ than the width w₂ of the cutting chisel 13 and also the width w₃ of the finishing chisel 15 is larger throughout its length l₃ than the with w₁ of the precutting chisel 11.

The three subchisels 11, 13 and 15 are tapered and are provided with a clearance angle γ along their whole active circumference, i.e. not only at the front side edge, but also at the lateral side edges 12 and 14, 17 and 19 and 21 and 23, respectively. In the embodiment, this clearance angle is equal for all three subchisels. In Fig. 3 reference 10 further indicates the rectilinear front side edge of the cutting portion of the precutting chisel 11.

The profile chisel 9 is designed and profiled so that from the master manufactured therewith production moulds are derived which are suitable for replicating projection screens having a lens structure according to US-A-4,573,764. In the present embodiment, the composite superimposed profile of the multiple head profile chisel 9 is identical to the profile of the lens elements as described more fully in the said US Patent Specification.

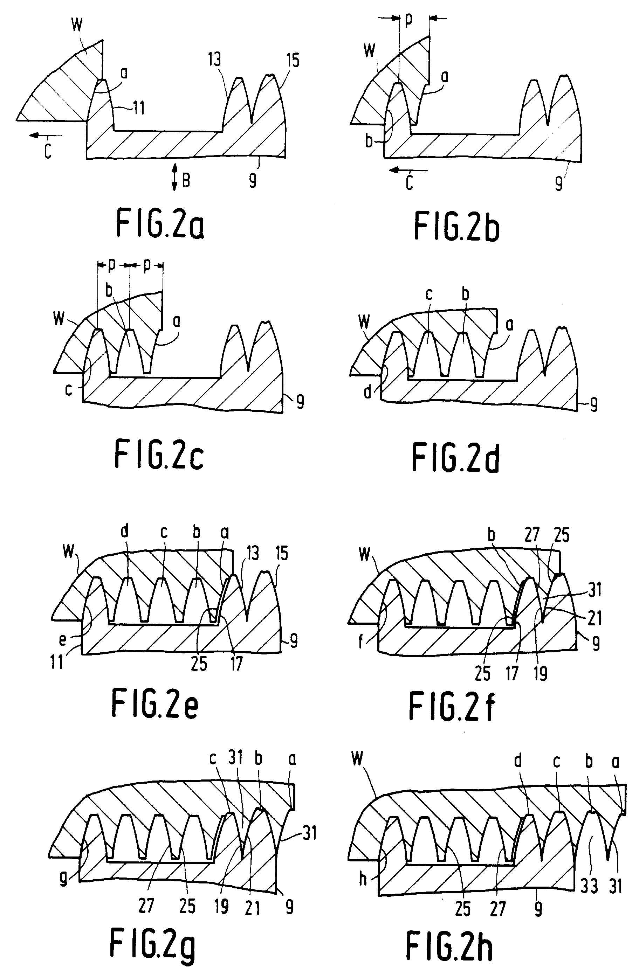

Figures 2a to 2h show in a number of successive steps the manufacture of a master by a slotting operation with the aid of the profile chisel 9. The cutting operation required for the slotting operation is obtained by rotation of the drum 3 with the plate W. The profile chisel 9 carries out the feed-in or slotting movement in the direction of the arrow B. Further, the drum 3 with the plate W and the chisel holder 5 with the profile chisel 9 are relatively displace stepwise in a direction parallel to the centre line of the drum over a distance equal to the pitch distance of the grooves to be cut. In the embodiment, for this purpose the profile chisel 9 is displaced in the direction of the arrow C.

For the manufacture of a master by the method according to the invention, the grooves to be formed are first preformed in a precutting step by means of the precutting chisel 11. Fig. 2a shows the step of preforming a partial groove a. Fig. 2b shows the preformed groove a, while a next groove b is being preformed. In this situation, the profile chisel 9 has been displaced over the pitch distance p in the direction of the arrow C. Fig. 2c shows the preformed grooves a and b, while a third groove c is preformed at a distance p from the groove b by means of the precutting-chisel 11. Fig. 2d shows the plate W with the three preformed grooves a, b and c, while after a further stepwise displacement of the profile chisel 9 over the pitch distance p, a fourth groove d is preformed by the precutting chisel 11. Fig. 2e shows the next tooling step, in which a precutting step a fifth groove e is preformed, while the partial groove a is tooled in a cutting step by the cutting chisel 13; in this situation, merely the bottom of the preformed groove a is deepened by the front edge of the cutting chisel 13. The side edge 17 of the cutting chisel 13, which is narrower than the precutting chisel 11, remains free from the flank 25 of the groove a and is not active as a cutting edge.

In the situation shown in Fig. 2f, a further groove f is preformed, while the groove b is machined by the cutting chisel 13. The bottom of the groove b is deepened by the cutting chisel 13 and the flank 27 of the groove b is preshaped by the side edge 19 of the cutting chisel 13. Also in this situation, the side edge 17 of the cutting chisel 13 remains free from the flank 25 of the groove b. A similar situation arises in the following steps. Since the finishing chisel 15 profiles at the same time the bottom and the flank 25 of the partial groove a in a finishing step, in this manner a rib 31 is formed terminating in a sharp knife edge and having the ultimately desired profile. Due to the fact that the rib 31 is machined simultaneously at both flanks 25 and 27, the rib 31 is loaded substantially uniformly in the transverse direction and undesired deformation of the rib in the transverse direction is avoided. Fig. 2g shows the preforming of a further groove g, while the righthand flank of the groove c is preshaped by the side edge 19 of the cutting chisel 13 and the bottom is recessed. The groove b is shaped by the finishing chisel 15 into the ultimate form, while again a rib 31 having the ultimately desired profile is formed between the two grooves b and c. Fig. 2h shows the next machining step, in which again a groove h is preformed by the precutting chisel 11, while the groove d is preshaped by the cutting chisel 13 and the groove c is shaped by the finishing chisel 15 into the ultimate profile.

Fig. 4 shows on an enlarged scale and in sectional view a part of the master M obtained ultimately in the manner described and provided with a number of identical profiled comparatively deep grooves 33 separated by ribs 31, whose wall terminates in a sharp knife edge 33. β designates the apis angle of the rib 31, which corresponds to the intersection angle α in Fig. 3. The pitch distance p is equal to the maximum width of the grooves 33.

By means of the method according to the invention, a master was manufactured, in which the following parameters, dimensions and materials were used:

| | |
|---|---|
| plate material | methyl acrylate |
| dimensions plate | 1382 x 1100 mm, |
| thickness plate | 2 mm |
| material profile chisel | carbide metal |
| clearance angle of chisels γ | 5° |
| l₂-l₁ | 35 µm |
| l₃-l₂ | 35 µm |
| depth t of grooves | 0.424 µm |
| pitch distance p | 0.289 µm |
| intersection angle α = apic angle β | 16° |

The time required for the manufacture of the master was 8 hours at a speed of revolution of the drum of 1/sec.

According to the embodiment described, a master was manufactured by means of a chisel having a positive profile identical to the profile of the lens structure of the ultimate projection screen, the master consequently having a negative profile. In a similar manner, by means of the method according to the invention, masters can be manufactured having a positive profile identical to the lens structure, in which event a chisel having a negative profile is used.

Further, in the embodiment described, a pattern of identical grooves and ribs is provided on the plate. However, it is also possible to cause the profile of the grooves and ribs to vary from pitch to pitch by a stepwise rotation of the multiple chisel in the cutting plane.

## Claims

1. A method of manufacturing a master for the fabrication of projection screens provided on one side with a lens structure consisting of a plurality of parallel rectilinear lens elements which are separated by grooves, according to which method a plurality of parallel rectilinear grooves and ribs corresponding to the lens structure are chiselled with profile chisel means (9) on one side of a plate (W) of machinable material, characterized in that the profile chisel means (9) comprises a plurality of subchisels (11, 13, 15) with different profiles, that the profile of each of the grooves in the plate is chiselled in a number of chiselling steps equal to the number of the subchisels, each of the steps being done by a different one of the subchisels (11, 13, 15), and in that during each of the steps several of the grooves are simultaneously chiselled, each by a different one of the subchisels (11, 13, 15).

2. A method as claimed in Claim 1, characterized in that the chiselling steps comprise a precutting step, a cutting step and a finishing step.

3. A method as claimed in Claim 2, characterized in that the cutting step and the finishing step are carried out simultaneously on two adjacent grooves.

4. A method as claimed in any one of Claims 1 to 3, characterized in that
- the plate (W) is wrapped around a rotatable drum,
- the chisel means (9) is mounted on a chisel holder (3),
- a first chiselling operation is carried out by a feed-in movement of the chisel holder with the chisel means in the radial direction with respect to the centre line of the drum and by a rotary movement of the drum,
- and in that due to successive stepwise relative displacements of the drum and the chisel holder in the axial direction over a distance equal to the pitch distance of the grooves to be cut further successive chiselling operations are carried out.

5. A method as claimed in any one of the preceding Claims, characterized in that before performing the chiselling steps, the plate is first machined substantially flat.

6. A chisel (9) for carrying out the method claimed in any one of Claims 1 to 5 characterized in that the chisel is a multiple head chisel and is composed of three subchisels with different profiles, i.e. a precutting chisel (11), a cutting chisel (13) and a finishing chisel (15), the subchisels being arranged for simultaneously chiselling profiles of different grooves.

7. A chisel as claimed in Claim 6, characterized in that the distance between the median planes of the cutting chisel and the precutting chisel is a multiple of the distance between the median planes of the cutting chisel and the finishing chisel.

8. A chisel as claimed in any one of Claims 6 or 7, characterized in that the subchisels are made of carbide metal.

## Patentansprüche

1. Verfahren zum Herstellen einer Muttermatrize zum Herstellen von Projektionsschirmen an einer Seite mit einer Linsenstruktur, die aus einer Anzahl paralleler geradliniger Linsenelementen besteht, die durch Rillen voneinander getrennt sind, wobei mit diesem Verfahren eine Anzahl paralleler geradliniger Rillen und Rippen entsprechend der Linsenstruktur mit einem Profilmeißelmittel (9) an einer Seite einer Platte (W) aus bearbeitbarem Material angebracht wird, dadurch gekennzeichnet, daß das Profilmeißelmittel (9) eine Anzahl von Untermeißeln (11, 13, 15) mit verschiedenen Profilen enthält, daß das Profil jeder der Rillen in der Platte in einer Anzahl von Meißelschritten gleich der Anzahl der Untermeißel angebracht wird, wobei jeder der Schritte mit einem anderen der Untermeißel (11, 13, 15) durchgeführt wird, und daß in jedem der Schritte verschiedene der Rillen durch je einen anderen der Untermeißel (11, 13, 15) gleichzeitig angebracht werden.

2. Verfahren nach Anspruch 1, dadurch gekennzeichnet, daß die Meißelschritte einen Vorschneideschritt, einen
Schneideschritt und einen Fertigungsschritt umfassen.

3. Verfahren nach Anspruch 2, dadurch gekennzeichnet, daß der Schneideschritt und der Fertigungsschritt gleichzeitig in zwei benachbarten Rillen erfolgen.

4. Verfahren nach einem der Ansprüche 1 bis 3, dadurch gekennzeichnet,
- die Platte (W) um eine drehbare Trommel gewickelt ist,
- das Meißelmittel (9) in einer Meißelhalterung (3) montiert ist,
- ein erster Meißelvorgang durch eine Einführungsbewegung der Meißelhalterung mit dem Meißelmittel in radialer Richtung in bezug auf die Mittellinie der Trommel und durch eine Drehbewegung der Trommel ausgeführt wird, und
- durch aufeinanderfolgende schrittweise relative Verschiebungen der Trommel und der Meißelhalterung in axialer Richtung über einen Abstand gleich dem Steigungsabstand der zu schneidenden Rillen weiter aufeinanderfolgende Meißelvorgänge durchgeführt werden.

5. Verfahren nach einem der vorangehenden Ansprüche, dadurch gekennzeichnet, daß vor der Durchführung der Meißelschritte die Platte zunächst im wesentlichen flach bearbeitet wird.

6. Meißel (9) zum Durchführen des Verfahrens nach einem oder mehreren der Ansprüche 1 bis 5, dadurch gekennzeichnet, daß der Meißel ein Mehrkopfmeißel ist und aus drei Untermeißeln mit verschiedenen Profilen besteht, d.h. aus einem Vorschneidemeißel (11), einem Schneidemeißel (13) und einem Fertigstellungsmeißel (15), wobei die Untermeißel zum gleichzeitigen Bearbeiten von Profilen verschiedener Rillen angeordnet sind.

7. Meißel nach Anspruch 6, dadurch gekennzeichnet, daß der Abstand zwischen den Medianebenen des Schneidemeißels und des Vorschneidemeißels ein Vielfaches des Abstands zwischen den Medianebenen des Schneidemeißels und des Fertigstellungsmeißels ist.

8. Meißel nach einem der Ansprüche 6 oder 7, dadurch gekennzeichnet, daß die Untermeißel aus Karbidmetall hergestellt sind.

## Revendications

1. Procédé de réalisation d'une matrice mère pour la fabrication d'écrans de projection pourvus d'un côté d'une structure lenticulaire constituée d'une pluralité d'éléments lenticulaires rectilignes parallèles qui sont séparés par des rainures, suivant lequel une pluralité de nervures et de rainures rectilignes parallèles correspondant à la structure lenticulaire est burinée au moyen d'un burin profilé (9) d'un côté d'une plaque (w) de matière usinable, caractérisé en ce que le burin profilé (9) comprend plusieurs sous-burins (11, 13, 15) présentant des profils différents, que le profil de chacune des rainures dans la plaque est buriné en un nombre d'opérations de burinage égal au nombre de sous-burins, chacune des opérations étant effectuée par un sous-burin différent (11, 13, 15) et que, pendant chacune des opérations, plusieurs rainures sont simultanément burinées, chacune par un sous-burin (11, 13, 15) différent.

2. Procédé suivant la revendication 1, caractérisé en ce que les opérations de burinage comprennent une opération de prétaille, une opération de taille et une opération de finition.

3. Procédé suivant la revendication 2, caractérisé en ce que l'opération de taille et l'opération de finition sont exécutées simultanément sur deux rainures adjacentes.

4. Procédé suivant l'une quelconque des revendications 1 à 3, caractérisé en ce que
- la plaque (W) est appliquée autour d'un tambour rotatif,
- le burin (9) est monté sur un porte-burin (3),
- une première opération de burinage est exécutée par un mouvement d'avancement du porte-burin avec le burin dans le sens radial par rapport à l'axe central du tambour et par un mouvement de rotation du tambour, et que,
- suite à des déplacements relatifs pas à pas successifs du tambour et du porte-burin dans le sens axial, d'une distance égale au pas des rainures à tailler, d'autres opérations de burinage successives sont exécutées.

5. Procédé suivant l'une quelconque des revendications précédentes, caractérisé en ce qu'avant l'exécution des opérations de burinage, la plaque est tout d'abord usinée en substance à plat.

6. Burin (9) pour exécuter le procédé suivant l'une quelconque des revendication 1 à 5, caractérisé en ce que le burin est un burin à têtes multiples composé de trois sous-burins présentant des profils différents, à savoir un burin de prétaille (11), un burin de taille (13) et un burin de finition (15), les sous-burins étant agencés de manière à buriner simultanément des profils de rainures différentes.

7. Burin suivant la revendication 6, caractérisé en ce que la distance entre les plans médians du burin de taille et du burin de prétaille est un multiple de la distance entre les plans médians du burin de taille et du burin de finition.

8. Burin suivant l'une ou l'autre des revendications 6 et 7, caractérisé en ce que les sous-burins sont faits d'un métal du type carbure.
